# EUROPEAN PATENT SPECIFICATION

(11) **EP 3 889 571 B1**
(45) Date of publication and mention of the grant of the patent: **25.03.2026**
(21) Application number: 20166537.9
(22) Date of filing: 29.03.2020
(51) Int. Cl.: G01M 13/00

(54) **METHOD AND SYSTEM FOR DIAGNOSING A ROTATION MACHINE**
VERFAHREN UND SYSTEM ZUR DIAGNOSE EINER DREHMASCHINE
PROCÉDÉ ET SYSTÈME POUR LE DIAGNOSTIC D'UNE MACHINE TOURNANTE

(43) Date of publication of application: 06.10.2021
(73) Proprietor: Hitachi, Ltd., Tokyo 100-8280 (JP)
(72) Inventor: YAMASHITA, Tomoaki, London, EC2Y (GB); KATO, Tetsuji, London, EC2Y (GB); ELLIS, Robert, London, EC2Y (GB)
(74) Representative: MERH-IP Matias Erny Reichl Hoffmann Patentanwälte PartG mbB

(56) References cited:
- CA-A1- 2 307 873
- US-A1- 2012 182 052
- US-A1- 2019 154 465

## Description

The herein described subject matter relates to a method and a diagnostic system for diagnosing rotating components in a rotation machine for electric vehicles.

Mechanical failures of rotating components in rotation machines of electric vehicles such as electric railway vehicles or electric cars can cause serious damage. Unexpected failures lead to operational disruption, increased costs, and safety concerns. To solve this issue, a diagnostic system is needed that monitors the rotating components in a rotation machine and diagnosis occurring failures at an early stage.
Patent Literature 1: JP-2017-227492 A

Patent Literature 1 describes a vibration measurement and abnormality detection apparatus. The vibration measuring device is fixed to a railway vehicle and measures the vibrations of different vehicle parts such as the axle box using vibration sensors attached to the respective component. The abnormality detection device performs a frequency analyses of the measured vibration data and determines an abnormality if the peak value of the frequency analysis exceeds a predetermined threshold value.

However, a precise failure detection based on measured sensor data in electric railway vehicles is still a major challenge because the measured data is often superimposed by electromagnetic interferences, which cannot be removed by frequency filters, since their frequencies are too close to the signal to be measured.

US 2019/154465 A1 discloses a vehicle including a traction motor; and a drive controller. The traction motor includes a rotational position sensor configured to detect a rotational position of a rotor magnetically. The drive controller controls a driving current output to the traction motor. The drive controller is able to switch a control mode of the driving current between a sensing control mode configured to control the driving current by using a detection result from the rotational position sensor and a sensing-less control mode configured to control the driving current without using a detection result from the rotational position sensor. US 2012/182052 A1 shows a device for providing electrical signals with high immunity to noise. The invention develops a device for processing electrical signals coming from a measurement sensor, said sensor being subjected to noise disturbances caused by radio interference and lightning effects, such that said device uses a single current-loop cable, through which passes the electrical signal encoded according to the signal time and repetition time of the current wave of said signal, such that said signal contains an upper current state and a lower current state whose values are outside the decision window that activates a reading device in the device, which reads the electrical signal coming from the sensor. CA 2 307 873 describes a failure detection system in a propulsion system for hybrid vehicles that detects the occurrence of failure that obstructs a phase current supplied to an electric motor for propulsion. The direct current of a battery is converted to three-phase alternating current by an inverter and supplied to the electric motor. A controller drive controls the inverter so that the output torque of the electric motor attains a target torque. Each of the phase currents supplied to the electric motor are detected by a current sensor and provided to a comparator. The comparator compares the value of each of the detected phase currents and a current limit value calculated by a current limit value calculation circuit, and outputs a signal showing that a current phase has abnormally risen. This signal is counted by a counter, and the occurrence of failure is identified based on this count value.

An object of the herein described subject matter is to realise a method and a diagnostic system for precisely and reliably diagnose mechanical failures of rotating components in a rotation machine for electric vehicles. This problem is solved by the subject matter according to the independent claims. Further preferred developments are described by the dependent claims.

The herein described subject matter comprises a method for diagnosing mechanical failures of rotating components in a rotation machine which may be installed in an electric vehicle such as an electric railway vehicle or an electric car. The rotation machine includes at least one electric motor, at least one inverter, a plurality of rotating components, at least one sensor mounted on at least one of the plurality of rotating components, a voltmeter and/or an ammeter to determine an electric current between the at least one inverter and the at least one electric motor, at least one vehicle control unit and at least one diagnostic system.

According to an aspect, at least one measuring signal of the at least one sensor mounted on at least one of the plurality of rotating components is recorded by the at least one diagnostic system if the absolute value of an electric current between the at least one inverter and the at least one electric motor determined by the voltmeter and/or the ammeter is equal to or below a predetermined current value. Preferably, the predetermined current value, to which the absolute value of the motor current is compared to, lies in a range of 0% to 10% of the rated current and most preferably the predetermined current value lies in a range of 0% and 5% of the rated current. In this case, the electric vehicle operates in coasting mode which means it only moves due to inertia. This means that no current is supplied to or generated by the electric motor or that there is only a small current flow between the inverter and the electric motor. As a result, the measuring signal of the at least one sensor attached to at least one of the rotating components is not disturbed by electromagnetic interference due to switching of the inverter or high current flow through the electric motor. Thus, a mechanical failure of a rotating component can be accurately detected

Furthermore, the method may comprise the steps of determining the absolute value of the electric current between the at least one inverter and the at least one electric motor and starting recording of the at least one measuring signal of the at least one sensor if the determined absolute value of the current flow is equal to or below the predetermined current value. In other words, if the method detects that no current or only a small amount of current flows between the invertor and the electric motor, recording of the measuring signal of the at least one sensor is started. Additionally, a sequence of the measuring signal may be analyzed before the recording starts, to doublecheck that the signal is not interfered. For example, the noise power of a short measuring sequence of, e.g., 30 s to 2 min, may be determined, in order to ensure that the measuring signal is in fact not disturbed.

Then, the measuring data may be recorded for a predetermined time and the recording may be stopped when the predetermined time is reached. The predetermined time for recording may depend on the type of rotating component to be monitored and on the measuring signal itself. For example, a temperature measurement may need a longer measuring time to detect an irregularity than an acceleration measurement. Preferably, the predetermined time for the recording lies in a range of 30 s to 30 min.

Subsequently, the method may execute the steps of comparing the at least one recorded measuring signal with a reference signal, calculating a deviation of the at least one recorded measuring signal from the reference signal and detecting an abnormality if the calculated deviation exceeds a first predetermined threshold value. The reference signal may be a measuring signal recorded at mint condition of the rotation machine under defined environmental conditions (route, vehicle velocity, environmental temperature etc.) and stored by the diagnostic system. There may be a plurality of reference signals for the different sensors and rotating components measured and analyzed by the diagnostic system. Depending on the recorded measuring signal, the deviation may be calculated by comparing the time-based measuring signal with the stored reference signal, wherein the currently recorded measuring signal, for example, may be corrected with regard to the differences in the environmental conditions compared to the reference signal. The calculated deviation in this case may be a deviation curve showing the difference between the currently recorded measuring signal and the reference signal in a specific time period. An abnormality may be detected if, for example, the mean value of the deviation curve exceeds the first predetermined threshold value. It may also be possible to compare the maximum value of the calculated deviation curve with the first predetermined threshold value, to detect an abnormality.

Alternately or in addition, an FFT analyses may be carried out with the reference signal and the currently recorded measuring signal, for example, if the measuring signal comes from a vibration sensor. In this case, the peak values of the FFT analyses may be compared to calculate the deviation between the currently recorded measuring signal and the reference signal.

The first predetermined threshold value to indicate an abnormality of a monitored rotating component may preferably be in a range of 5% to 20% deviation from a corresponding reference signal.

The at least one recorded measuring signal as well as the calculated deviation may be stored by the diagnosis system.

The above described procedure enables a precise abnormality detection of a rotating component by recording a measuring signal of a sensor mounted on said rotating component only if the measuring signal is not superimposed by interferences caused by inverter switching or high current supplied to the electric engine.

The electric current between the at least one inverter and the at least one electric motor is determined using a sensor arranged between the at least one inverter and the at least one electric motor. The sensor is a voltmeter to measure the voltage at the inverter and/or the motor. Alternately or in addition, an ammeter is used to directly measure the current flow in the lead cable.

Alternatively or additionally, the electric current between the at least one inverter and the at least one electric motor may be determined depending on a position of a drive lever or an accelerator pedal of the electric vehicle. The position of the drive lever or the accelerator pedal may correspond to the current drawn by the electric motor. Therefore, it may be possible to determine the motor current from an output signal of these actuators. In case that no electric power is transmitted to the electric motor, the drive lever/accelerator pedal may be in neutral position which allows for easily detecting the coasting mode.

An alarm may be outputted by the diagnostic system if the calculated deviation exceeds a second predetermined threshold value. The second predetermined threshold may preferably be in a range of 20% to 30% deviation from a corresponding reference signal.

Alternatively or in addition, an alarm may be outputted if a relative difference between two deviations calculated in succession exceeds a third predetermined threshold value. In other words, the gradient of the deviation may be evaluated and an alarm may be issued if the deviation increases rapidly in order to prevent failure of the electric vehicle due to a rapidly growing defect of a rotating component. The third predetermined threshold value may preferably be in a range of 5% to 50% relative difference between two deviations calculated in succession and most preferably in a range of 10% to 30%.

Furthermore, the recording of the at least one measuring signal may be started if a vehicle velocity is equal to or higher than a first predetermined velocity value and equal to or lower than a second predetermined velocity value. This allows for capturing measuring signals at defined conditions which improves the comparability of the recorded data and enables a precise failure detection.

The vehicle velocitiy may be measured by a speed sensor attached to the drive shaft or the wheels of the electric vehicle. The measuring signal of the speed sensor may be transmitted to the vehicle control unit and/or to the diagnostic system. Alternatively or in addition the vehicle velocity may be determined from a GPS signal received by the diagnostic system or the vehicle control unit. Depending on the measuring signal, the first predetermined velocity value may be in a range of 5% to 40% of the maximum velocity of the electric vehicle and the second predetermined velocity value may be in a range of 40% to 90% of the maximum velocity value of the electric vehicle.

Further, when the recording is performed for the predetermined time, the determined electric current between the at least one inverter and the at least one electric motor may be monitored and the recording of the at least one measuring signal may be stopped if the determined current is equal to or higher than the predetermined current value. In other words, it may be checked during the recording of the at least one measuring signal if the electric vehicle remains in coasting condition, which means that the determined current is equal to or lower than the predetermined current value

Alternatively or additionally, the vehicle velocity may be monitored and the recording of the at least one measuring signal may be stopped if the vehicle velocity is below the first predetermined velocity value or above the second predetermined velocity value. In other words, it may be checked during the recording of the at least one measuring signal if the vehicle velocity remains in the predetermined range to ensure comparable measuring conditions.

The monitoring of the determined current may be carried out, e.g., by checking the measured motor current/motor voltage at regular intervals during the recording of the measuring signal. Alternatively or in addition, the position of the drive lever or the acceleration pedal may be checked at regular intervals. The vehicle speed can be monitored in a similar manner by checking the received speed signal for deviations at regular intervals. Preferably, the interval time for checking the above described values to be monitored lies in a range of 10 ms to 1 min.

The at least one recorded measuring signal may be deleted if the recording is stopped at a time shorter than the predetermined time. This means that only these recordings may be stored by the diagnotic system which provide undisturbed measuring signals over the required measuring time. Recordings that are interrupted due to changes in the motor current or the vehicle velocity before the predetermined time has been reached may be deleted. This avoids that unusable recordings take up memory space.

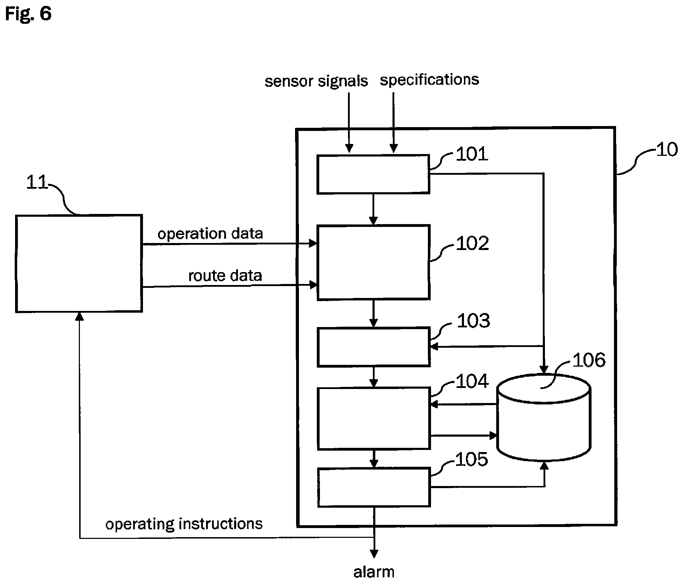

The herein described subject matter further comprises a diagnostic system including an input unit, a trigger unit, a data recorder, an evaluation unit, an output unit and a data storage. The diagnostic unit may receive at least one measuring signal from at least one sensor mounted on at least one of the plurality of rotating components and from at least one vehicle control unit and may perform the method as described above. More than one diagnostic system may be attached to the electric vehicle. The interactions between the different units of the diagnostic system are described below in connection with Fig. 6.

Furthermore, the herein described subject matter comprises a rotation machine including at least one electric motor and at least one inverter. The electric motor may be an asynchronous or a synchronous motor or any kind of electric motor suitable to drive an electric vehicle. There may be more than one electric motor and more than one inverter attached to the electric vehicle. The rotation machine further comprises a voltmeter and/or an ammeter to determine an electric current between the at least one inverter and the at least one electric motor.

Additionally, the rotation machine includes a plurality of rotating components comprising at least one motor shaft, at least one gear, at least one drive shaft and at least one bearing. Furthermore, the rotation machine comprises at least one sensor mounted on at least one of the plurality of rotating components. The at least one sensor may be mounted, for example, on the motor shaft of the electric motor for measuring characteristic values that may suggest a failure of the shaft or the shaft bearings. It may also be possible to apply further sensors on the gear, the drive shaft and the bearings to exactly identify the location of the failure. The at least one sensor may be an acceleration sensor, an acoustic sensor, a vibration speed sensor, a strain gauge, a temperature sensor or any kind of sensor suitable for monitoring and diagnosing rotating components. It may also be possible to use a sensor which delivers more than one measuring signal such as a 3-axis acceleration sensor or a combined temperature/pressure sensor.

Further, the rotation machine includes at least one vehicle control unit and the above described diagnostic system. The vehicle control unit may be fixed to the electric vehicle and may be electrically connected to the diagnostic system. It may also be possible that more than one vehicle control unit is attached to the electric vehicle and that the diagnostic system is included in the vehicle control and vice versa. The vehicle control unit may include the operation data and the route data of the electric vehicle. The operation data may comprise information about the operational state of the electrical vehicle such as the vehicle velocity, the engine load, the required driving torque and so on. The route data may comprise, for example, timetables, route guidance and GPS data of the actual vehicle position. The vehicle control unit may control the speed and the load of the electric motor based on the required vehicle speed and the driving resistance. For this purpose, it may be connected to a variety of sensors and actors, such as speed sensors, current sensors, and inverters. The vehicle control unit may further control additional functions of the electric vehicle like the air conditioning, the door openers and so on.

Additionally, the herein described subject matter may comprise a computer program product storable in a memory comprising instructions which, when carried out by a computer, cause the computer to perform the method described above.

Summarizing, the herein described subject matter enables a precise abnormality detection of a rotating component by recording a measuring signal of a sensor mounted on said rotating component only if the measuring signal is not disturbed by interferences caused by the surrounding high-voltage components.

In the following the invention will be further explained based on at least one preferential example of the invention with reference to the attached exemplary drawings, wherein:
- Fig. 1: depicts a schematic view of a rotation machine mounted on a bogie frame 9;
- Fig. 2a to 2d: show examples of measuring signals of a vibration sensor with and without interferences caused by the electric engine or the inverter;
- Fig. 3: shows schematically a comparison between a conventional abnormality detection and the abnormality detection according to the herein described subject matter;
- Fig. 4: illustrates schematically two possible developments of a detected component failure and the reaction of the claimed diagnostic system;
- Fig. 5: depicts schematically an integration of the diagnostic system in a vehicle;
- Fig. 6: shows a schematic example of the diagnostic system;
- Fig. 7: depicts a flow chart as a first example of the claimed method
- Fig. 8: depicts a flow chart as a second example of the claimed method; and
- Fig. 9: depicts a flow chart as a third example of the claimed method.

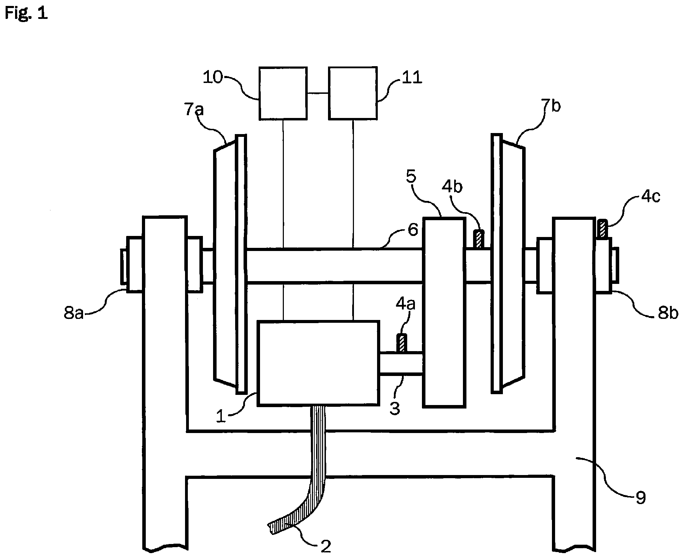

Fig. 1 depicts schematically an example of a rotation machine mounted on a bogie frame 9. The depicted rotation machine includes an electric motor 1, a motor shaft 3, a gear 5, a drive shaft 6, two bearings 8a, 8b, a vehicle control unit 11 and a diagnostic system 10. In the depicted example, the motor shaft 3, the drive shaft 6 and one bearing 8b of the rotation machine are equipped with sensors 4a, 4b, 4c for measuring, e.g., the vibrations of the different rotating components. It may also be possible to measure the temperature or other values suitable for monitoring and diagnosing the condition of the respective components.

The electric motor 1 is connected to an inverter (not depicted) by at least one lead cable 2. The electric motor 1 may be an asynchronous or a synchronous motor or any kind of electric motor suitable to drive an electric vehicle 13. There may be more than one electric motor 1 and more than one inverter attached to the electric vehicle 13 which may be connected by more than one lead cable 2.

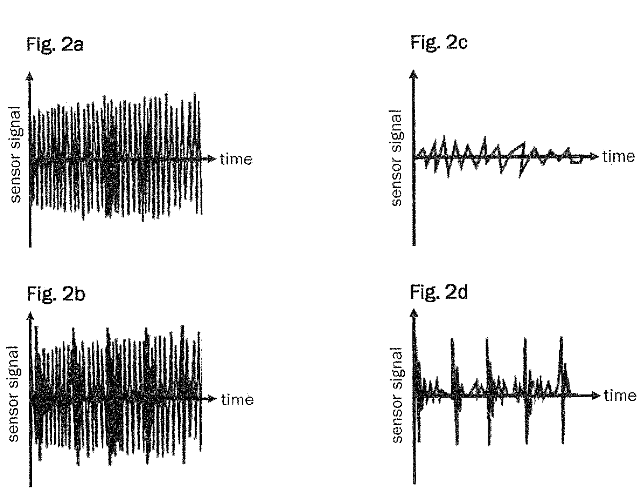

Fig. 2a to 2d present examples of measuring signals of a vibration sensor with and without interferences caused by the electric engine or the inverter. The Figs. 2a and 2b show sensor measuring signals recorded during the operation of the electric motor 1, wherein Fig. 2a depicts a vibration measurement on a rotating component having regular vibration characteristics, and Fig. 2b depicts a vibration measurement on a rotating component having irregular vibration characteristics. It is clearly derivable from Fig. 2b that the vibration irregularities of the damaged rotating component are difficult to determine due to the noise which is superimposed on the measuring signal. To the contrary, the Figs. 2c and 2d show sensor measuring signals recorded during a coasting phase of an electric vehicle 13 when the electric power supply to the rotation machine is shut off. Fig. 2c illustrates a vibration measurement on a rotating component, which shows regular vibration characteristics, and Fig. 2d illustrates a vibration measurement on a rotating component which shows irregular vibration characteristics. During the coasting phase the measuring signal is not disturbed by the inverter noise (see Fig. 2c), so that an irregularity can be accurately determined from the measuring signal of the vibration sensor as derivable from Fig. 2d.

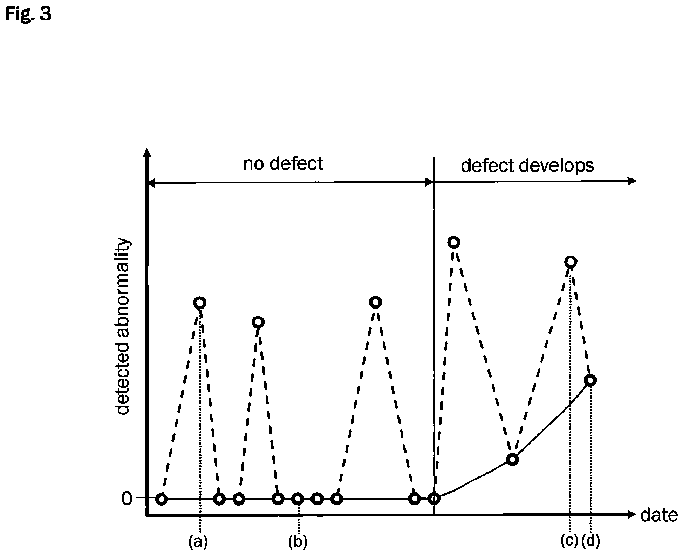

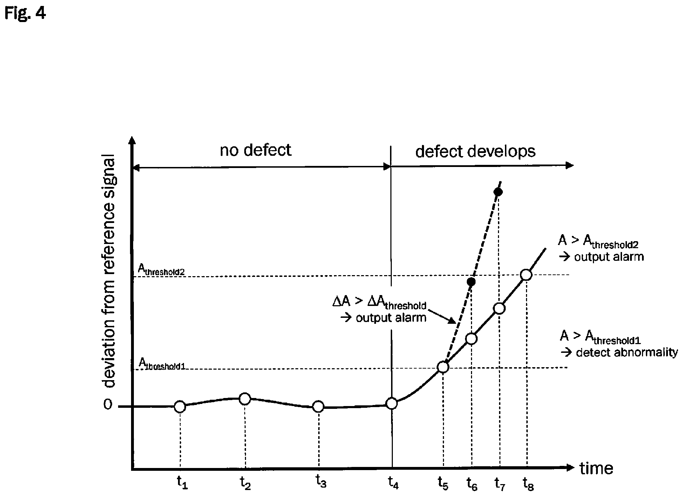

In Fig. 3 a comparison between a conventional abnormality detection and the abnormality detection according to the herein described subject matter is schematically depicted. A conventional abnormally detection uses sensor measuring signals recorded during operation of the electric motor. As a result, the measuring signal is superimposed by inverter noise. Due to the disturbed measuring signal, abnormalities cannot be accurately identified, and misdetections occur. The occurrence of misdetections is visible by the dashed line depicted in the diagram of Fig. 3 which represents an evaluation of vibration measurements using conventional abnormality detection. Although the component monitored by the vibration sensor is undamaged, the conventional abnormality detection mistakenly recognizes an abnormality, for example, on the date (a). To the contrary, the claimed method of abnormality detection represented by the solid line does not show such misdetections. It is further derivable from Fig. 3 that the development of a component damage cannot be sufficiently determined by the conventional abnormality detection. Due to the irregular failure detections a continuous development of a component damage is not discernible (see, for example, the detected abnormalities on the dates (c) and (d)). In contrast, the claimed method of abnormality detection enables the evaluation of a component failure process based on the continuous increase of the detected abnormality (see right diagram area in which the defect develops). This allows for an adequate reaction of the diagnostic system 10 with regard to the development of the detected failure as obvious from Fig. 4.

The diagram depicted in Fig. 4 illustrates two different ways as to how a component failure detected by the claimed diagnostic system 10 may develop and the corresponding reactions of the diagnostic system 10.

The first four measuring points at the times t₁ to t₄ show no irregularities of the monitored component, all of the determined deviation values lie below a first threshold value A_{threshold1} which indicates an abnormality of the monitored component. However, in the fifth measuring point at the time t₅ the determined deviation exceeds the first threshold value A_{threshold1} so that an abnormality is detected. As a result, the diagnostic system 10 shortens the time period between the measuring points t₅ to t₈ to monitor the affected component more closely. In case of the failure development indicated by the solid line (white dots), the failure increases moderately, so that the monitored component can be further operated in the rotation machine until the detected deviation exceeds a second threshold value A_{threshold2} which leads to an alarm. To the contrary, in case of the failure development indicated by the dashed line (black dots), the abnormality increases rapidly, so that the diagnostic system 10 outputs an alarm caused by exceeding a failure gradient threshold ΔA_{threshold} shortly after the abnormality has been detected. It becomes clear from the dashed curve depicted in Fig. 4 that, without considering the failure gradient, the deviation in the next measuring point t₆ would have been far above the second threshold value A_{threshold2}, which could have led to a serious malfunction of the rotation machine. Thus, monitoring the gradient of the deviation besides the deviation itself allows for reliably avoiding breakdown of the rotation machine.

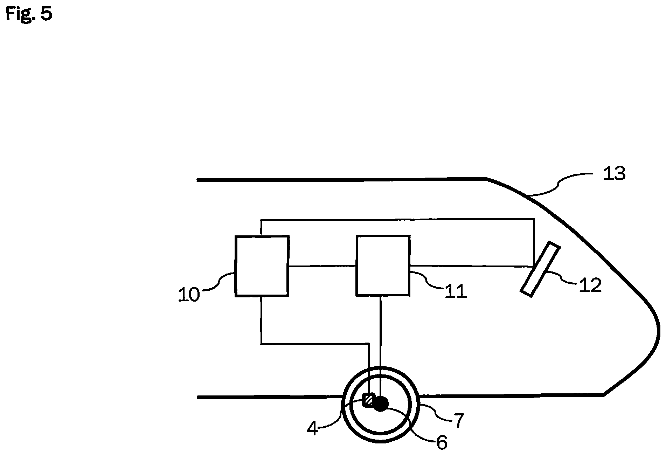

Fig. 5 depicts schematically an integration of the diagnostic system 10 in an electric vehicle 13. The diagnostic system 10 may be fixed to the electric vehicle 13 and electrically connected to the vehicle control unit 11 and the driver machine interface 12 of the electric vehicle 13. It may also be possible that the diagnostic system 10 is integrated in the vehicle control unit 11 or vice versa. A sensor 4 for monitoring the drive shaft 6 of the driving wheel set 7 may be connected to the diagnostic system 10. The vehicle control unit 11 may receive, amongst others, a speed value from a speed sensor (not depicted) attached to the drive shaft or the wheel set 7. The speed sensor may also be connected to the diagnostic system 10 and the sensor 4 for monitoring the drive shaft may also be connected to the vehicle control unit 11. Furthermore, data may be exchanged between the vehicle control unit 11, the diagnostic system 10 and the driver machine interface 12. For example, the vehicle control unit 11 may transmit operation data, such as the vehicle speed and the drive lever position, and route data, such as the current position of the electric vehicle 13, to the diagnostic system 10. The diagnostic system 10 may then use this data to identify suitable time slots for recording the sensor measuring signal. Furthermore, the diagnostic system 10 may transmit the diagnostic results to the vehicle control unit 11, which may subsequently initiate, for example, a speed reduction of the electric vehicle 13 due to a detected abnormality of a rotating component. If the diagnostic system 10 issues an alarm caused by a defect in a rotating component, the corresponding signal may also be sent to the driver machine interface 12 in order to inform the driver of the electric vehicle 13 of the fault.

Fig. 6 shows a schematic example of the diagnostic system 10. The depicted diagnostic system 10 comprises an input unit 101, a trigger unit 102, a data recorder 103, an evaluation unit 104, an output unit 105 and a data storage 106.

The input unit 101 receives the signals of the sensors 4, 4a, 4b, 4c for monitoring and diagnosing the rotating components. In case the electric current between the inverter and the electric motor 1 is measured by a respective sensor, the input unit 101 also receives this current signal. It may also be possible that said current signal is transmitted to the vehicle control unit 11 or that the vehicle control unit 11 or the diagnostic system 10 determines the electric current between the inverter and the electric motor 1 based on the position of the drive lever or the accelerator pedal. Furthermore, specifications such as recording parameters (e.g., sampling frequency, recording time) and component parameters (e.g., reference values for component temperatures, vibration amplitudes, vibration velocities) may be entered in the input unit 101 and transmitted to the database 106 for storage.

The trigger unit 102 is configured to trigger the recording of the sensor measuring signals. To that, it may receive the operation and route data from the vehicle control unit 11. The trigger unit further receives the determined value of the electric current between the inverter and the electric motor. The operation data may comprise information about the operational state of the electrical vehicle such as the vehicle velocity, the engine load, the required driving torque and so on. The route data may comprise, for example, timetables, route guidance and GPS data of the actual vehicle position. The trigger unit 102 may analyze the electrical current determined between the inverter and the electric motor in conjunction with the operating and route data of the electric vehicle to decide whether the vehicle conditions are suitable for recording the sensor measurement signals. The trigger unit 102 sends a trigger signal to start the recording of the sensor measuring signals to the data recorder 103 if the determined electric current between the inverter and the electric motor 1 is equal to or below a predetermined current value. It may also be possible, that the trigger unit 102 may additionally check if the vehicle velocity lies in a predetermined range before sending a trigger signal to the data recorder 103. Furthermore, it may be possible that the trigger unit 102 may consider additional signals of the operation and route data, like the position of the drive lever or the length of the route to the next stop in order to decide whether the vehicle conditions are suitable for starting a recording of the measurement signals.

When receiving the trigger signal, the data recorder 103 starts the recording of the received measuring signals and carries out the recording for a predetermined recording time. The predetermined recording time, the sampling frequency and all other information required to perform a correct recording may be stored in the database 106 and may be transmitted to the data recorder 103 when the trigger unit 102 sends the trigger signal to the data recorder 103.

After recording the sensor measuring signals the data recorder 103 may send the recorded data to the evaluation unit 104 for analysis. The evaluation unit 104 may preprocess the recorded data and then calculate the deviations of the recorded measuring signals from the respective reference signals. The reference signals, as well as threshold values for indicating if a deviation is in an allowable range, may be stored in the database 106 and send to the evaluation unit 105 if requested. The reference signals may be measuring signals of the respective rotating component recorded at mint condition of the rotation machine under defined environmental conditions (route, vehicle velocity, environmental temperature etc.). Depending on the recorded measuring signal, the deviation is calculated by comparing the time-based measuring signal with the stored reference signal, wherein the currently recorded measuring signal, for example, may be corrected with regard to the differences in the environmental conditions compared to the reference signal. The calculated deviation in this case may be a deviation curve showing the difference between the currently recorded measuring signal and the reference signal in a specific time period. Alternately or in addition, an FFT analyses may be carried out with the reference signals and the currently recorded measuring signals. In this case, the peak values of the FFT analyses may be compared to calculate the deviation between the currently recorded measuring signal and the reference signal. The calculated deviations and the recorded sensor measuring signals are then stored in the database 106.

If the evaluation unit 104 determines that a calculated deviation is above a first predetermined threshold value, it detects an abnormality and sends this information to the output unit 105. The output unit 105 transmits the abnormality to the vehicle control unit 11, which thereupon may adapt the operating parameters of the electric vehicle 13 by, e.g., reducing speed, to avoid a breakdown of the rotation machine. The abnormality may also be stored in the database 106 and may lead to a shorter interval between the recordings of the sensor measuring signals. If the evaluation unit 104 determines that a deviation is above a second predetermined threshold, it may issue an alarm which may be transmitted via the output unit 105 to the vehicle control unit 11 and the driver machine interface 12. In this case, the power of the electric motor 1 may be significantly reduced and the electric vehicle 13 may be stopped at the next opportunity to avoid an accident.

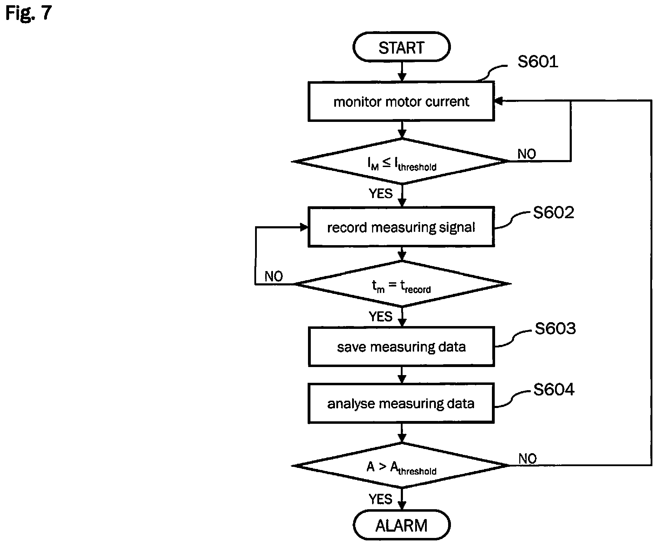

Fig. 7 depicts a flow chart as a first example of the claimed method. After starting the diagnostic method, the electric current between the inverter and the electric motor 1 is monitored in the step S601, e.g., by directly measuring the motor current or the motor voltage or by analyzing the signal of the drive lever/accelerator pedal of the electric vehicle 13. If the relative value of the motor current I_{M} is equal to or below a predetermined current value I_{threshold}, the measuring signals are recorded (S602), wherein the measuring signals may be transmitted from different sensors 4, 4a, 4b, 4c mounted on several rotating components of the electric vehicle 13. The recording is carried out for a predetermined time tₛₐₘₚₗₑ after which the measuring data is saved (S603). In the subsequent step 604, the measuring data is analyzed in terms of possible mechanical failures of the rotating components monitored by the attached sensors 4, 4a, 4b, 4c. If an abnormality A is detected that exceeds a predetermined second threshold value A_{threshold2}, an alarm is issued, e.g., to the drive machine interface of the electric vehicle 13. The abnormality may be detected based on a deviation of a measuring signal from a reference signal.

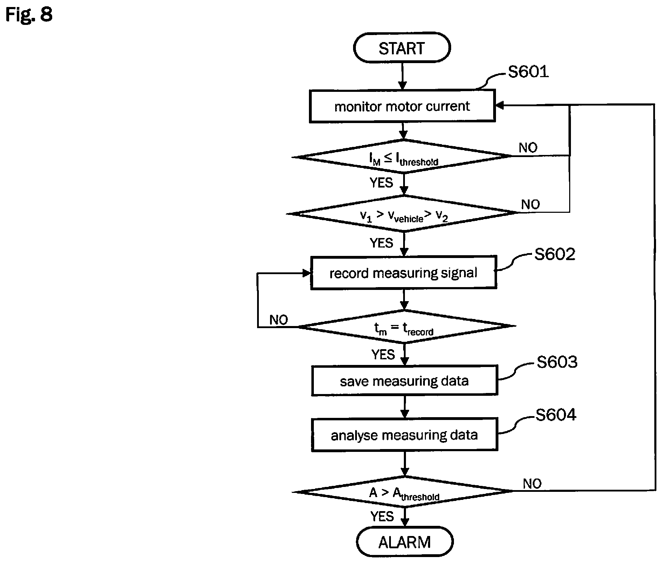

Fig. 8 depicts a further flow chart as a second example of the claimed method. The second example of the claimed method is identical to the first example depicted in Fig. 7 except there is a second requirement between the steps S601 and S602 which has to be fulfilled to start the recording of the sensor measuring signals. In addition to the requirement that the relative value of motor current has to be equal to or below a predetermined current value I_{threshold}, the vehicle velocity of the electric vehicle 13 has to be in a range between a first vehicle velocity v₁ and a second vehicle velocity v₂. This allows for recording measuring signals under defined conditions and for identifying failures more reliably.

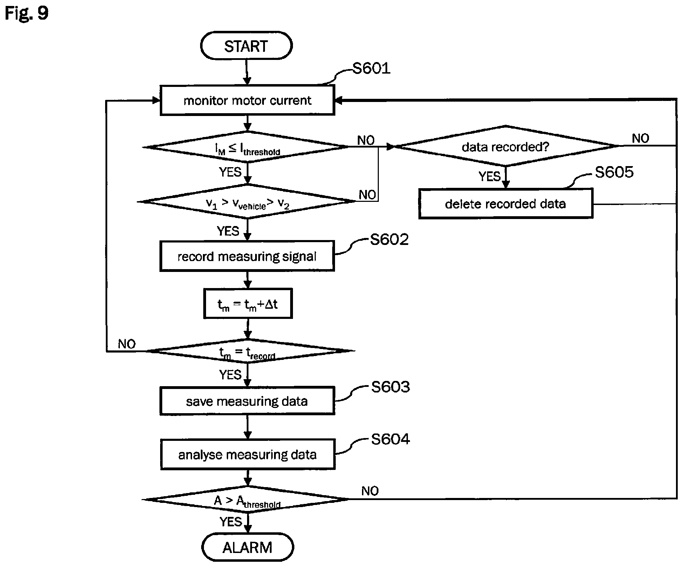

Fig. 9 depicts a flow chart as a third example of the claimed method. In the third example the requirements I_{M} ≤ I_{threshold} and v₁ > v_{vehicle} > v₂ for recording the measuring signals are checked in a regular time interval Δt during the measuring time tₘ until the predetermined time tₛₐₘₚₗₑ is reached. If the requirements are fulfilled during the entire measuring time, the further procedure is identical to the first and second example. In case that at least one of the requirements is not fulfilled at a certain time during the recording of the measuring signals, the recording is stopped and the method is started at the beginning. In case that measuring data has been recorded, step 605 is carried out and the recorded data is deleted. The additional steps of monitoring the measuring conditions during the data recording and deleting unusable recording data allows to further improve the quality of the failure detection and to avoid wasting storage space.

In terms of the above depicted flow charts, it should be understood that the operations may be performed in a different order, that certain operations may be combined and that certain operations may overlap, or the like. In general, all features of the different examples, which are described herein, and which are shown by the Figures, may be combined either in part or in whole. The herein described subject-matter shall also entail these combinations as far as it is apparent to the person skilled in the art without applying inventive activity.It should also be noted that the description and drawings merely illustrate the principles of the proposed methods, devices and systems. It will thus be appreciated that those skilled in the art will be able to devise various arrangements that, although not explicitly described or shown herein, embody the principles of the herein described subject matter and are included within its scope as defined by the claims.

Again summarizing, the herein described subject matter enables a precise abnormality detection of a rotating component by recording a measuring signal of a sensor 4, 4a, 4b, 4c mounted on said rotating component only if the measuring signal is not disturbed by interferences caused by the surrounding high-voltage components.

### Reference sign list

- 1: electric motor
- 2: lead cable
- 3: motor shaft
- 4, 4a, 4b, 4c: sensor
- 5: gear
- 6: drive shaft
- 7, 7a, 7b: wheel, wheel set
- 8a, 8b: bearing
- 9: bogie frame
- 10: diagnostic system
- 11: vehicle control unit
- 12: driver machine interface
- 13: electric vehicle
- 101: input unit
- 102: trigger unit
- 103: data recorder
- 104: evaluation unit
- 105: output unit
- 106: data storage

## Claims

1. Method for diagnosing mechanical failures of rotating components in a rotation machine for an electric vehicle (13)
including at least one electric motor (1), at least one inverter, a plurality of rotating components, at least one sensor (4, 4a, 4b, 4c) for measuring vibrations mounted on at least one of the plurality of rotating components, a voltmeter and/or an ammeter to determine an electric current between the at least one inverter and the at least one electric motor, at least one vehicle control unit (11) and at least one diagnostic system (10), wherein the at least one diagnostic system (10) carries out the following steps:
- recording at least one measuring signal of the at least one sensor (4, 4a, 4b, 4c) mounted on at least one of the plurality of rotating components if an absolute value of an electric current between the at least one inverter and the at least one electric motor (1) determined by the voltmeter and/or the ammeter is equal to or below a predetermined current value, so that no current or only a small amount of current flows between the at least one inverter and the at least one electric motor (1),
- comparing the at least one recorded measuring signal with a reference signal,
- calculating a deviation of the at least one recorded measuring signal from the reference signal, and
- detecting an abnormality if the calculated deviation exceeds a first predetermined threshold.

2. Method according to claim 1, comprising the following steps carried out by the diagnostic system (10)
- determining the absolute value of the electric current between the at least one inverter and the at least one electric motor (1),
- starting recording of the at least one measuring signal of the at least one sensor (4, 4a, 4b, 4c) if the determined absolute value of the determined current is equal to or below the predetermined current value,
- performing the recording of the at least one measuring signal for a predetermined time,
- comparing the at least one recorded measuring signal with a reference signal,
- calculating a deviation of the at least one recorded measuring signal from the reference signal,
- detecting an abnormality if the calculated deviation exceeds a first predetermined threshold value, and
- storing the at least one recorded measuring signal and the calculated deviation.

3. Method according to at least one of the preceding claims, wherein the electric current between the at least one inverter and the at least one electric motor (1) is determined using a sensor arranged between the at least one inverter and the at least one electric motor (1).

4. Method according to at least one of the preceding claims, wherein the electric current between the at least one inverter and the at least one electric motor (1) is determined depending on a position of a drive lever or an accelerator pedal of the electric vehicle (13).

5. Method according to at least one of the preceding claims, further comprising
- outputting an alarm if the calculated deviation exceeds a second predetermined threshold value, and/or if a relative difference between two deviations calculated in succession exceeds a third predetermined threshold value.

6. Method according to at least one of the preceding claims, further comprising
- starting the recording of the at least one measuring signal if a velocity of the electric vehicle (13) is equal to or higher than a first predetermined velocity value and equal to or lower than a second predetermined velocity value.

7. Method according to at least one of the preceding claims, further comprising, when performing the recording of the at least one measuring signal,
- monitoring the determined electric current between the at least one inverter and the at least one electric motor (1),
- stopping the recording of the at least one measuring signal if the determined current flow is higher than the predetermined current value.

8. Method according to claim 7, further comprising
- monitoring the velocity of the electric vehicle (13),
- stopping the recording of the at least one measuring signal if the velocity of the electric vehicle (13) is below the first predetermined velocity value or above the second predetermined velocity value.

9. Method according to at least one of the preceding claims 6 or 7, wherein the at least one recorded measuring signal is deleted if the recording is stopped at a time shorter than the predetermined time.

10. Diagnostic system (10) for diagnosing mechanical failures of rotating components in a rotation machine for an electric vehicle (13) including at least one inverter, a plurality of rotating components, at least one sensor (4, 4a, 4b, 4c) mounted on at least one of the plurality of rotating components, a voltmeter and/or an ammeter to determine an electric current between the at least one inverter and the at least one electric motor, and at least one vehicle control unit (11),
the diagnostic system (10) including
an input unit (101) configured to receive at least one measuring signal of the at least one sensor, and a signal of the electric current between the at least one inverter and the at least one electric motor determined by the voltmeter and/or the ammeter,
a trigger unit (102) configured to receive the determined electric current between the inverter and the electric motor, and to send a trigger signal to a data recorder if the determined electric current between the inverter and the electric motor (1) is equal to or below a predetermined current value, so that no current or only a small amount of current flows between the at least one inverter and the at least one electric motor (1),
the data recorder (103) configured to perform recording of the at least one measuring signal for a predetermined time after receiving the trigger signal from the trigger unit (102),
an evaluation unit (104) configured to compare the at least one recorded measuring signal with a reference signal, to calculate a deviation of the at least one recorded measuring signal from the reference signal, and to detect an abnormality if the calculated deviation exceeds a first predetermined threshold value,
an output unit (105) configured to transmit the detected abnormality to the vehicle control unit (11) if the calculated deviation exceeds a first predetermined threshold value,
and a data storage (106) configured to store the at least one recorded measuring signal and the calculated deviation.

11. Rotation machine for an electric vehicle (13) including at least one electric motor (1), at least one inverter, a plurality of rotating components, at least one sensor (4, 4a, 4b, 4c) mounted on at least one of the plurality of rotating components, a voltmeter and/or an ammeter to determine an electric current between the at least one inverter and the at least one electric motor, at least one vehicle control unit (11) and the diagnostic system (10) according to claim 10,
wherein the plurality of rotating components comprises at least one motor shaft (3), at least one gear (5), at least one drive shaft (6) and at least one bearing (8a, 8b).

## Patentansprüche

1. Verfahren zum Diagnostizieren mechanischer Ausfälle rotierender Komponenten in einer Rotationsmaschine für ein elektrisches Fahrzeug (13),
das mindestens einen elektrischen Motor (1), mindestens einen Wechselrichter, mehrere rotierende Komponenten, mindestens einen Sensor (4, 4a, 4b, 4c) zum Messen von Schwingungen, die auf mindestens einer der mehreren rotierenden Komponenten angebracht sind, ein Voltmeter und/oder ein Ampèremeter, um einen elektrischen Strom zwischen dem mindestens einen Wechselrichter und dem mindestens einen elektrischen Motor zu bestimmen, mindestens eine Fahrzeugsteuereinheit (11) und mindestens ein Diagnosesystem (10) enthält, wobei das mindestens eine Diagnosesystem (10) die folgenden Schritte ausführt:
- Aufzeichnen mindestens eines Messsignals des mindestens einen Sensors (4, 4a, 4b, 4c), der auf mindestens einer der mehreren rotierenden Komponenten angebracht ist, wenn ein absoluter Wert eines elektrischen Stroms zwischen dem mindestens einen Wechselrichter und dem mindestens einen elektrischen Motor (1), der durch das Voltmeter und/oder das Ampèremeter bestimmt wird, gleich einem vorgegebenen Stromwert ist oder unter diesem liegt, so dass kein Strom oder nur ein kleiner Strombetrag zwischen dem mindestens einen Wechselrichter und dem mindestens einen elektrischen Motor (1) fließt,
- Vergleichen des mindestens einen aufgezeichneten Messsignals mit einem Referenzsignal,
- Berechnen einer Abweichung des mindestens einen aufgezeichneten Messsignals von dem Referenzsignal und
- Detektieren einer Unregelmäßigkeit, wenn die berechnete Abweichung einen ersten vorgegebenen Schwellenwert übersteigt.

2. Verfahren nach Anspruch 1, das die folgenden Schritte umfasst, die durch das Diagnosesystem (10) ausgeführt werden,
- Bestimmen des absoluten Werts des elektrischen Stroms zwischen dem mindestens einen Wechselrichter und dem mindestens einen elektrischen Motor (1),
- Starten der Aufzeichnung des mindestens einen Messsignals des mindestens einen Sensors (4, 4a, 4b, 4c), wenn der bestimmte absolute Wert des bestimmten Stroms gleich dem vorgegebenen Stromwert ist oder unter diesem liegt,
- Ausführen der Aufzeichnung des mindestens einen Messsignals für eine vorgegebene Zeit,
- Vergleichen des mindestens einen aufgezeichneten Messsignals mit einem Referenzsignal,
- Berechnen einer Abweichung des mindestens einen aufgezeichneten Messsignals von dem Referenzsignal,
- Detektieren einer Unregelmäßigkeit, wenn die berechnete Abweichung einen ersten vorgegebenen Schwellenwert übersteigt, und
- Speichern des mindestens einen aufgezeichneten Messsignals und der berechneten Abweichung.

3. Verfahren nach mindestens einem der vorhergehenden Ansprüche, wobei der elektrische Strom zwischen dem mindestens einen Wechselrichter und dem mindestens einen elektrischen Motor (1) unter Verwendung eines Sensors bestimmt wird, der zwischen dem mindestens einen Wechselrichter und dem mindestens einen elektrischen Motor (1) angeordnet ist.

4. Verfahren nach mindestens einem der vorhergehenden Ansprüche, wobei der elektrische Strom zwischen dem mindestens einen Wechselrichter und dem mindestens einen elektrischen Motor (1) abhängig von einer Position eines Fahrhebels oder eines Fahrpedals des elektrischen Fahrzeugs (13) bestimmt wird.

5. Verfahren nach mindestens einem der vorhergehenden Ansprüche, das ferner umfasst:
- Ausgeben eines Alarms, wenn die berechnete Abweichung einen zweiten vorgegebenen Schwellenwert übersteigt und/oder wenn ein relativer Unterschied zwischen zwei Abweichungen, die in Folge berechnet werden, einen dritten vorgegebenen Schwellenwert übersteigt.

6. Verfahren nach mindestens einem der vorhergehenden Ansprüche, das ferner umfasst:
- Starten der Aufzeichnung des mindestens einen Messsignals, wenn eine Geschwindigkeit des elektrischen Fahrzeugs (13) gleich einem ersten vorgegebenen Geschwindigkeitswert oder höher als dieser und gleich einem zweiten vorgegebenen Geschwindigkeitswert oder niedriger als dieser ist.

7. Verfahren nach mindestens einem der vorhergehenden Ansprüche, das ferner dann, wenn das Aufzeichnen des mindestens einen Messsignals ausgeführt wird, umfasst:
- Überwachen des bestimmten elektrischen Stroms zwischen dem mindestens einen Wechselrichter und dem mindestens einen elektrischen Motor (1),
- Stoppen der Aufzeichnung des mindestens einen Messsignals, wenn der bestimmte Stromfluss größer als der vorgegebene Stromwert ist.

8. Verfahren nach Anspruch 7, das ferner umfasst:
- Überwachen der Geschwindigkeit des elektrischen Fahrzeugs (13),
- Stoppen der Aufzeichnung des mindestens einen Messsignals, wenn die Geschwindigkeit des elektrischen Fahrzeugs (13) unter dem ersten vorgegebenen Geschwindigkeitswert oder über dem zweiten bestimmten Geschwindigkeitswert liegt.

9. Verfahren nach mindestens einem der vorhergehenden Ansprüche 6 oder 7, wobei das mindestens eine aufgezeichnete Messsignal gelöscht wird, wenn die Aufzeichnung bei einer Zeit gestoppt wird, die kürzer als die vorgegebene Zeit ist.

10. Diagnosesystem (10) zum Diagnostizieren mechanischer Ausfälle rotierender Komponenten in einer Rotationsmaschine für ein elektrisches Fahrzeug (13), das mindestens einen Wechselrichter, mehrere rotierende Komponenten, mindestens einen Sensor (4, 4a, 4b, 4c), der auf mindestens einer der mehreren rotierenden Komponenten angebracht ist, ein Voltmeter und/oder ein Ampèremeter, um einen elektrischen Strom zwischen dem mindestens einen Wechselrichter und dem mindestens einen elektrischen Motor zu bestimmen, und mindestens eine Fahrzeugsteuereinheit (11) enthält,
wobei das Diagnosesystem (10) enthält:
eine Eingabeeinheit, die konfiguriert ist, mindestens ein Messsignal des mindestens einen Sensors und ein Signal des elektrischen Stroms zwischen dem mindestens einen Wechselrichter und dem mindestens einen elektrischen Motor, der durch das Voltmeter und/oder das Amperemeter bestimmt wird, zu empfangen,
eine Auslöseeinheit (102), die konfiguriert ist, den bestimmten elektrischen Strom zwischen dem Wechselrichter und dem elektrischen Motor zu empfangen und ein Auslösesignal an ein Datenaufzeichnungsgerät zu senden, wenn der bestimmte elektrische Strom zwischen dem Wechselrichter und dem elektrischen Motor (1) gleich einem vorgegebenen Stromwert ist oder unter diesem liegt, so dass kein Strom oder nur ein kleiner Strombetrag zwischen dem mindestens einen Wechselrichter und dem mindestens einen elektrischen Motor (1) fließt,
wobei das Datenaufzeichnungsgerät (103) konfiguriert ist, ein Aufzeichnen des mindestens einen Messsignals für eine vorgegebene Zeit nach dem Empfangen des Auslösesignals von der Auslöseeinheit (102) auszuführen,
eine Beurteilungseinheit (105), die konfiguriert ist, das mindestens eine aufgezeichnete Messsignal mit einem Referenzsignal zu vergleichen, um eine Abweichung des mindestens einen aufgezeichneten Messsignals von dem Referenzsignal zu berechnen und eine Unregelmäßigkeit zu detektieren, wenn die berechnete Unregelmäßigkeit einen ersten Schwellenwert übersteigt,
eine Ausgabeeinheit (105), die konfiguriert ist, die detektierte Unregelmäßigkeit an die Fahrzeugsteuereinheit (11) zu senden, wenn die berechnete Abweichung einen ersten vorgegebenen Schwellenwert übersteigt,
und einen Datenspeicher (106), der konfiguriert ist, das mindestens eine aufgezeichnete Messsignal und die berechnete Abweichung zu speichern.

11. Rotationsmaschine für ein elektrisches Fahrzeug (13), das mindestens einen elektrischen Motor (1), mindestens einen Wechselrichter, mehrere rotierende Komponenten, mindestens einen Sensor (4, 4a, 4b, 4c), der auf mindestens einer der mehreren rotierenden Komponenten angebracht ist, ein Voltmeter und/oder ein Ampèremeter, um einen elektrischen Strom zwischen dem mindestens einen Wechselrichter und dem mindestens einen elektrischen Motor zu bestimmen, mindestens eine Fahrzeugsteuereinheit (11) und das Diagnosesystem (10) nach Anspruch 10 enthält,
wobei die mehreren rotierenden Komponenten mindesten eine Motorwelle (3), mindestens ein Zahnrad (5), mindestens eine Antriebswelle (6) und mindestens ein Lager (8a, 8b) umfassen.

## Revendications

1. Procédé de diagnostic de défaillances mécaniques de composants rotatifs dans une machine rotative pour un véhicule électrique (13),
incluant au moins un moteur électrique (1), au moins un onduleur, une pluralité de composants rotatifs, au moins un capteur (4, 4a, 4b, 4c) pour mesurer des vibrations monté sur l'un au moins de la pluralité de composants rotatifs, un voltmètre et/ou un ampèremètre pour déterminer un courant électrique entre ledit au moins un onduleur et ledit au moins un moteur électrique, au moins une unité de commande de véhicule (11) et au moins un système de diagnostic (10), dans lequel ledit au moins un système de diagnostic (10) exécute les étapes suivantes consistant à :
- enregistrer au moins un signal de mesurage dudit au moins un capteur (4, 4a, 4b, 4c) monté sur l'un au moins de la pluralité de composants rotatifs si une valeur absolue d'un courant électrique entre ledit au moins un onduleur et ledit au moins un moteur électrique (1) déterminée par le voltmètre et/ou l'ampèremètre est égale ou inférieure à une valeur de courant prédéterminée, de telle sorte qu'aucun courant ou une petite quantité de courant seulement s'écoule entre ledit au moins un onduleur et ledit au moins un moteur électrique (1),
- comparer ledit au moins un signal de mesurage enregistré à un signal de référence,
- calculer un écart dudit au moins un signal de mesurage enregistré par rapport au signal de référence, et
- détecter une anomalie si l'écart calculé dépasse un premier seuil prédéterminé.

2. Procédé selon la revendication 1, comprenant les étapes suivantes exécutées par le système de diagnostic (10), consistant à
- déterminer la valeur absolue du courant électrique entre ledit au moins un onduleur et ledit au moins un moteur électrique (1),
- démarrer un enregistrement dudit au moins un signal de mesurage dudit au moins un capteur (4, 4a, 4b, 4c) si la valeur absolue déterminée du courant déterminé est égale ou inférieure à la valeur de courant prédéterminée,
- effectuer l'enregistrement dudit au moins un signal de mesurage pendant un temps prédéterminé,
- comparer ledit au moins un signal de mesurage enregistré à un signal de référence,
- calculer un écart dudit au moins un signal de mesurage enregistré par rapport au signal de référence,
- détecter une anomalie si l'écart calculé dépasse une première valeur seuil prédéterminée, et
- stocker ledit au moins un signal de mesurage enregistré et l'écart calculé.

3. Procédé selon l'une au moins des revendications précédentes, dans lequel le courant électrique entre ledit au moins un onduleur et ledit au moins un moteur électrique (1) est déterminé à l'aide d'un capteur agencé entre ledit au moins un onduleur et ledit au moins un moteur électrique (1).

4. Procédé selon l'une au moins des revendications précédentes, dans lequel le courant électrique entre ledit au moins un onduleur et ledit au moins un moteur électrique (1) est déterminé en fonction d'une position d'un levier d'entraînement ou d'une pédale d'accélérateur du véhicule électrique (13).

5. Procédé selon l'une au moins des revendications précédentes, comprenant en outre l'étape consistant à
- sortir une alarme si l'écart calculé dépasse une deuxième valeur seuil prédéterminée, et/ou si une différence relative entre deux écarts calculés successivement dépasse une troisième valeur seuil prédéterminée.

6. Procédé selon l'une au moins des revendications précédentes, comprenant en outre l'étape consistant à
- démarrer l'enregistrement dudit au moins un signal de mesurage si une vitesse du véhicule électrique (13) est égale ou supérieure à une première valeur de vitesse prédéterminée, et est égale ou inférieure à une seconde valeur de vitesse prédéterminée.

7. Procédé selon l'une au moins des revendications précédentes, comprenant en outre, lors de l'étape consistant à effectuer l'enregistrement dudit au moins un signal de mesurage, les opérations consistant à
- surveiller le courant électrique déterminé entre ledit au moins un onduleur et ledit au moins un moteur électrique (1),
- arrêter l'enregistrement dudit au moins signal de mesurage si l'écoulement de courant déterminé est supérieur à la valeur de courant prédéterminée.

8. Procédé selon la revendication 7, comprenant en outre les étapes consistant à
- surveiller la vitesse du véhicule électrique (13),
- arrêter l'enregistrement dudit au moins un signal de mesurage si la vitesse du véhicule électrique (13) est en dessous de la première valeur de vitesse prédéterminée ou au-dessus de la seconde valeur de vitesse prédéterminée.

9. Procédé selon l'une au moins de la revendication précédente 6 ou 7, dans lequel ledit au moins un signal de mesurage enregistré est supprimé si l'enregistrement est arrêté à un temps plus court que le temps prédéterminé.

10. Système de diagnostic (10) destiné à diagnostiquer des défaillances mécaniques de composants rotatifs dans une machine rotative pour un véhicule électrique (13), incluant au moins un onduleur, une pluralité de composants rotatifs, au moins un capteur (4, 4a, 4b, 4c) monté sur l'un au moins de la pluralité de composants rotatifs, un voltmètre et/ou un ampèremètre pour déterminer un courant électrique entre ledit au moins un onduleur et ledit au moins un moteur électrique, et au moins une unité de commande de véhicule (11),
le système de diagnostic (10) incluant
une unité d'entrée (101) configurée pour recevoir au moins un signal de mesurage dudit au moins un capteur, et un signal du courant électrique entre ledit au moins un onduleur et ledit au moins un moteur électrique déterminé par le voltmètre et/ou l'ampèremètre,
une unité de déclenchement (102) configurée pour recevoir le courant électrique déterminé entre l'onduleur et le moteur électrique, et pour envoyer un signal déclencheur vers un enregistreur de données si le courant électrique déterminé entre l'onduleur et le moteur électrique (1) est égal ou inférieur à une valeur de courant prédéterminée de telle sorte qu'aucun courant ou une petite quantité de courant seulement s'écoule entre ledit au moins un onduleur et ledit au moins un moteur électrique (1),
l'enregistreur de données (103) configuré pour effectuer un enregistrement dudit au moins un signal de mesurage pendant un temps prédéterminé après réception du signal déclencheur depuis l'unité de déclenchement (102),
une unité d'évaluation (104) configurée pour comparer ledit au moins un signal de mesurage enregistré à un signal de référence, pour calculer un écart dudit au moins un signal de mesurage enregistré par rapport au signal de référence, et pour détecter une anomalie si l'écart calculé dépasse une première valeur seuil prédéterminée,
une unité de sortie (105) configurée pour transmettre l'anomalie détectée à l'unité de commande de véhicule (11) si l'écart calculé dépasse une première valeur seuil prédéterminée, et
et un moyen de stockage de données (106) configuré pour stocker ledit au moins un signal de mesurage et l'écart calculé.

11. Machine rotative pour un véhicule électrique (13) incluant au moins un moteur électrique (1), au moins un onduleur, une pluralité de composants rotatifs, au moins un capteur (4, 4a, 4b, 4c) monté sur l'un au moins de la pluralité de composants rotatifs, un voltmètre et/ou un ampèremètre pour déterminer un courant électrique entre ledit au moins un onduleur et ledit au moins un moteur électrique, au moins une unité de commande de véhicule (11) et le système de diagnostic selon la revendication 10,
dans lequel la pluralité de composants rotatifs comprend au moins un arbre de moteur (3), au moins un engrenage (5), au moins un arbre d'entraînement (6) et au moins un palier (8a, 8b).
